# EUROPEAN PATENT APPLICATION

(11) **EP 1 806 893 A2**
(43) Date of publication of application: **11.07.2007**
(21) Application number: 07100045.9
(22) Date of filing: 03.01.2007
(51) Int. Cl.: H04L 27/26, H04L 1/02

(54) **Apparatus and method for communicating data in hybrid diversity mode in broadband wireless communication system**

(30) Priority: 05.01.2006 KR 20060001473
(71) Applicant: Samsung Electronics Co., Ltd., Suwon-si, Gyeonggi-Do (KR)
(72) Inventor: Lee, Jong-Hyeuk, Gyeonggi-do (KR); Cho, Myeon-Kyun, Gyeonggi-do (KR); Nam, Seung-Hoon, Seoul (KR); Jung, Bang-Chul, Seoul (KR); Sung, Dan-Keun, Deajeon (KR); Cho, Sung-Soo, Deagu (KR); Hong, Young-Jun, Seoul (KR)
(74) Representative: Zimmer, Franz-Josef

(57) **Abstract**

Provided is an apparatus and method for communicating data in a hybrid diversity mode in a broadband wireless communication system. In a method for transmitting data to a subscriber station (SS) in the broadband wireless communication system, null subbands are determined using feedback information received from the SS. TX data to be transmitted to the SS are mapped to a diversity zone from which the null subbands has been excluded. The mapped data are OFDM-modulated and transmitted to the SS. In this way, frequency subbands with poor channel conditions are excluded from data transmission. Accordingly, it is possible to enhance the FER performance and transmit data at a high MCS level.

## Description

### PRIORITY

This application claims priority under 35 U.S.C. § 119 to a Korean application filed in the Korean Intellectual Property Office on January 5, 2006 and allocated Serial No. 2006-1473, the contents of which are incorporated herein by reference.

### BACKGROUND OF THE INVENTION

### 1. Field of the Invention

The present invention relates generally to an apparatus and method for communicating data in a broadband wireless communication system, and more particularly, to an apparatus and method for communicating data in a hybrid diversity mode in a broadband wireless communication system, the hybrid diversity mode being a hybrid of a diversity mode and a band Adaptive Modulation and Coding (AMC) mode.

### 2. Description of the Related Art

Many wireless communication technologies have been proposed for high-speed mobile communications. Among them, Orthogonal Frequency Division Multiplexing (OFDM) is considered as the most powerful next-generation wireless communication technology. OFDM technology is expected to come into commercial use in most wireless communication systems around 2010. The Institute of Electrical and Electronics Engineers (IEEE) 802.16 based Wireless Metropolitan Area Network (WMAN), called "3.5 ^{th} generation (3.5G) technology", adopts the OFDM technology as its standard specification.

A broadband wireless communication system using the OFDM technology generally transmits data in a diversity mode or a band AMC mode.

In the diversity mode, data are distributed and transmitted over the entire frequency band and band AMC is possible only in a time domain. The diversity mode can cope well with a wireless channel with frequency-selective characteristics because it uses the entire frequency band by hopping between subbands. In addition, the diversity mode reduces complexity and overhead because it uses a general Medium Access Protocol (MAP) and requires only time-domain scheduling.

In the band AMC mode, only a few best subbands of the entire frequency band are selected and used for data transmission. Therefore, the band AMC mode can increase an average Signal-to-Interference-plus-Noise Ratio (SINR) and thus can provide a high data rate. However, because triggering conditions must be met in order to use the band AMC mode, only a few subscriber stations (SSs) in a cell can use the band AMC mode. In addition, the band AMC mode increases complexity and overhead because it must use a band AMC MAP and requires frequency-domain scheduling as well as time-domain scheduling.

As described above, the use of the band AMC mode is desirable for achieving a high data throughput. However, because the triggering conditions must be met to use the band AMC mode, most SSs in a cell have no choice but to operate in the diversity mode. In the diversity mode, a data rate (or an AMC level) is determined by an average channel value of the entire frequency band. Therefore, the average channel value in the diversity mode is greatly reduced due to subbands with very poor channel conditions.

In use, although data can be transmitted at a high data rate by excluding subbands with very poor channel conditions from data transmission, occasionally data are transmitted at a very low data rate due to the use of the subbands with very poor channel conditions. In this way, there may be an SS that exhibits poor performance in both the diversity mode and the band AMC mode. What is therefore required is a new technology that can enhance the advantages and overcome the disadvantages of the diversity mode and the band AMC mode.

### SUMMARY OF THE INVENTION

An object of the present invention is to substantially solve at least the above problems and/or disadvantages and to provide at least the advantages below. Accordingly, an object of the present invention is to provide an apparatus and method for enhancing a data throughput in a broadband wireless communication system.

Another object of the present invention is to provide an apparatus and method for excluding, in the case of a diversity mode, frequency subbands with poor channel conditions from data transmission in a broadband wireless communication system.

A further object of the present invention is to provide an apparatus and method for transmitting, using a frequency-selective fading effect, high-rate data to an SS that is moving at a medium or low speed in a broadband wireless communication system.

Still another object of the present invention is to provide an apparatus and method for providing a hybrid diversity mode, which is a hybrid of a diversity mode and a band AMC mode, in a broadband wireless communication system.

According to one aspect of the present invention, there is provided a method for transmitting data to an SS in a broadband wireless communication system. In the method, null subbands are determined using feedback information received from the SS. TX data to be transmitted to the SS are mapped to a diversity zone from which the null subbands has been excluded. The mapped data are OFDM-modulated and transmitted to the SS.

According to another aspect of the present invention, there is provided a method for receiving data in a broadband wireless communication system. In the method, a received signal is OFDM-demodulated to generate frequency-domain data. A channel is estimated using the frequency-domain data. If the broadband wireless communication system operates in a hybrid diversity mode, null subbands with poor channel conditions are determined using the channel estimation value. Information indicating the null subbands is fed back to a transmitter.

According to another aspect of the present invention, there is provided a apparatus for transmitting data in a broadband wireless communication system. The apparatus comprises a controller for determining null subbands using feedback information received from a subscriber station (SS), a subchannel mapper for mapping TX data to be transmitted to the SS to a diversity zone from which the null subbands has been excluded, and an orthogonal frequency division multiplexing (OFDM) modulator for inverse fast Fourier transform processing the mapped data from the subchannel mapper.

### BRIEF DESCRIPTION OF THE DRAWINGS

The above and other objects, features and advantages of the present invention will become more apparent from the following detailed description when taken in conjunction with the accompanying drawings in which:
FIG. 1 is a block diagram of a transmitter in a broadband wireless communication system according to the present invention;
FIG. 2 is a block diagram of a receiver in a broadband wireless communication system according to the present invention;
FIG. 3 is a flowchart illustrating a procedure for transmitting data in a hybrid diversity mode in a broadband wireless communication system according to the present invention;
FIG. 4 is a flowchart illustrating a procedure for receiving data in a hybrid diversity mode in a broadband wireless communication system according to the present invention;
FIG. 5 is a graph illustrating an operational principle of the present invention;
FIGs. 6A and 6B are graphs comparing the performance of a diversity mode with the performance of a hybrid diversity mode; and
FIGs. 7A and 7B are graphs illustrating the performances of transmission modes depending on the moving speeds of an SS.

### DETAILED DESCRIPTION OF THE PREFERRED EMBODIMENTS

Preferred embodiments of the present invention will be described herein below with reference to the accompanying drawings. In the following description, well-known functions or constructions are not described in detail since they would obscure the invention in unnecessary detail. Also, the terms used herein are defined according to the functions of the present invention. Thus, the terms may vary depending on user's or operator's intent and usage. That is, the terms used herein must be understood based on the descriptions made herein.

The present invention provides a hybrid diversity mode that is a hybrid of a diversity mode and a band AMC mode. In the hybrid diversity mode, a diversity mode is basically used whereby frequency subbands with poor channel conditions are excluded from data transmission.

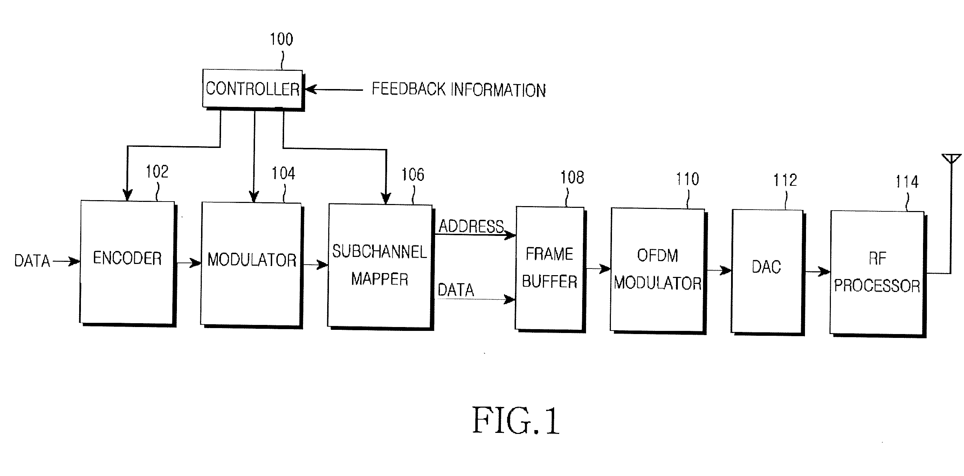

As illustrated in FIG 1, the transmitter includes a controller 100, an encoder 102, a modulator 104, a subchannel mapper 106, a frame buffer 108, an Orthogonal Frequency Division Multiplexing (OFDM) modulator 110, a digital-to-analog converter (DAC) 112, and a radio frequency (RF) processor 114. The following description focuses on an operation of a hybrid diversity mode according to the present invention.

Referring to FIG. 1, controller 100 determines a Modulation and Coding Scheme (MCS) level and null subbands using feedback information received from a subscriber station (SS). At this point, the null subbands imply subbands that are to be excluded from data transmission. The feedback information may include information indicating frequency subbands with poor channel conditions and Channel Quality Information (CQI). Index or bitmap information may be used to transmit the feedback information about the null subbands from the SS to a base station (BS). When the entire frequency band is divided into 10 subbands, 10-bit bitmap information may be used to transmit the feedback information about the null subbands from the SS to the BS. For example, when the feedback bitmap information is "0000110001", the BS determines that the fifth, sixth and tenth subbands have poor channel conditions. The bitmap information and the CQI may be transmitted to the BS over a CQI channel defined in the corresponding standards.

In addition, controller 100 controls a coding rate of encoder 102 and a modulation level of modulator 104 according to the determined MSC level, and controls a subchannel mapping operation of subchannel mapper 106 based on the determined null subbands.

Encoder 102 encodes an input data bitstream at a predetermined coding rate to output encoded data (i.e., encoded bits or symbols). When the number of the input data bits and the coding rate are k and R, respectively, the number of the output symbols is *k*/*R*. Examples of encoder 102 include a convolutional encoder, a turbo encoder, or a Low Density Parity Check (LDPC) encoder.

Modulator 104 maps the output symbols of encoder 102 to signaling points by a predetermined modulation scheme (or modulation level) to output complex symbols. Examples of the predetermined modulation scheme include a Binary Phase Shift Keying (BPSK) modulation scheme, a Quadrature Phase Shift Keying (QPSK) modulation scheme, an 8-ary Phase Shift Keying (8PSK) modulation scheme, a 16-array Quadrature Amplitude Modulation (16QAM) scheme, and a 64-array Quadrature Amplitude Modulation (16QAM) scheme. The BPSK modulation scheme maps one bit (s=1) to one signaling point (complex symbol), the QPSK modulation scheme maps two bits (s=2) to one complex symbol, the 8PSK modulation scheme maps four bits (s=3) to one complex symbol, the 16QAM scheme maps six bits (s=4) to one complex symbol, and the 64QAM scheme maps six bits (s=6) to one complex symbol.

Subchannel mapper 106 maps the output complex symbols of modulator 104 to corresponding zones according to a subchannel allocation scheme provided from the controller, and outputs the mapped complex symbols to corresponding memory addresses of frame buffer 108 corresponding to an actual frame size. Examples of the subchannel allocation scheme include a diversity allocation scheme, a hybrid diversity allocation scheme, and a band AMC allocation scheme, as described above. In the case of the hybrid diversity mode according to the present invention, subchannel mapper 106 maps the complex symbols to corresponding diversity zones. At this point, symbols to be transmitted are mapped to the remaining frequency band except the null subbands that are determined by the feedback information from the SS.

Frame buffer 108 is a buffer for arranging, in accordance with an actual order, complex symbols to be provided to OFDM modulator 110. Based on time synchronization, frame buffer 108 buffers complex symbols and sequentially outputs the buffered complex symbols on an OFDM symbol basis.

OFDM modulator 110 inverse fast Fourier transform (IFFT)-processes and converts the output complex symbols of frame buffer 108 into time-domain sample data, and attaches a copy of a rear portion of the sample data to the front of the sample data to output an OFDM symbol.

DAC 112 converts the sample data of OFDM modulator 110 into an analog signal. RF processor 114 includes a filter and a front-end unit. RF processor 114 RF-processes and converts the output analog signal of DAC 112 into an RF signal, and transmits the RF signal through a TX antenna over a wireless channel. The TX signal of the transmitter undergoes a multipath channel to become a noise-containing signal, and the noise-containing signal is received at an RX antenna of a receiver.

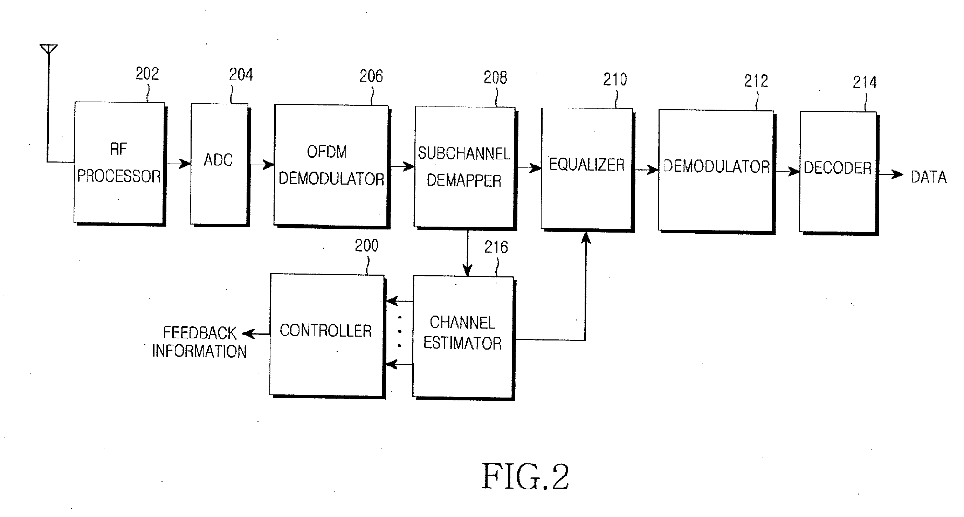

As illustrated in FIG. 2, the receiver includes a controller 200, an RF processor 202, an analog-to-digital converter (ADC) 204, an OFDM demodulator 206, a subchannel demapper 208, an equalizer 210, a demodulator 212, a decoder 214, and a channel estimator 216.

Referring to FIG. 2, RF processor 202 includes a front-end unit and a filter. RF processor 202 converts an RF signal, which has passed through a wireless channel, into an analog baseband signal. ADC 204 converts the analog baseband signal into a digital signal.

OFDM demodulator 206 removes a Cyclic Prefix (CP) from the output data of ADC 204, and fast Fourier transform (FFT)-processes the resulting data to output frequency-domain data.

Subchannel demapper 208 extracts actual data symbols from the output data of OFDM demodulator 206 to output the actual data symbols to equalizer 210. Also, subchannel demapper 208 extracts symbols (e.g., pilot symbols) of a predetermined location for channel estimation to output the pilot symbols to channel estimator 216.

Channel estimator 216 performs channel estimation using the pilot symbols of subchannel demapper 208, and provides the channel estimation values to controller 200 and equalizer 210. At this point, it is assumed that channel estimator 216 also performs SINR estimation.

Using the channel estimation values from subchannel demapper 208, equalizer 210 channel-compensates the data symbols of subchannel demapper 208 to output channel-compensated symbols. That is, equalizer 210 compensates for various noises generated at the wireless channel.

Demodulator 212 demodulates the output symbols of equalizer 210 according to the modulation scheme used in the transmitter, thereby outputting encoded data. Decoder 214 decodes the encoded data of demodulator 212 to restore original information data.

In the case of the hybrid diversity mode according to the present invention, controller 200 calculates an average channel value of each subband using the channel estimation values from channel estimator 216, and compares the average channel value with a predetermined threshold to determine null subbands. Thereafter, controller 200 generates CQI (e.g., SINR) of the remaining frequency band except the null subbands, and feeds information indicating the null subbands and the CQI back to a BS. For example, the information indicating the null subbands and the CQI are transmitted to the BS over a CQI channel.

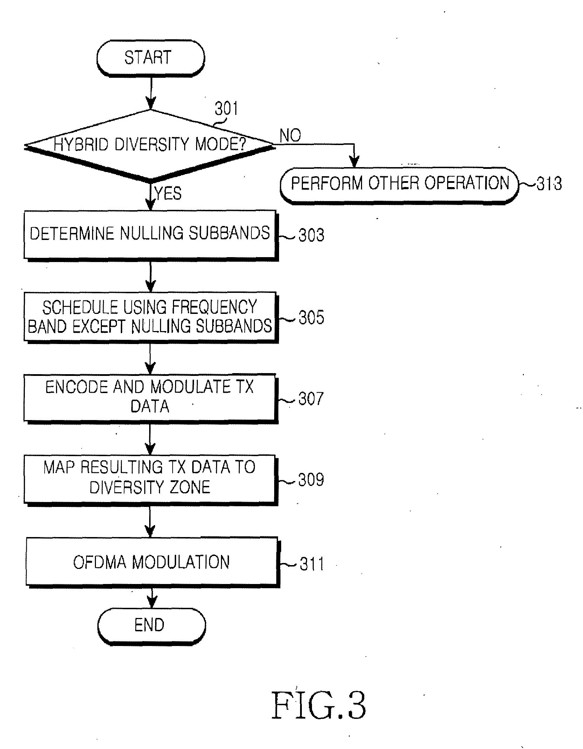

Referring to FIG. 3, the transmitter determines in step 301 if TX data need to be transmitted are data of an SS operating in a hybrid diversity mode. If so, the transmitter proceeds to step 303, and if not, the transmitter proceeds to step 313. In step 313, the transmitter performs other operation such as an operation corresponding to a diversity mode or a band AMC mode.

In step 303, the transmitter analyzes feedback information received from an SS to determine null subbands. In step 305, using the remaining frequency band except the determined null subbands, the transmitter performs scheduling to determine an MCS level and time/frequency resources to which the TX data are to be mapped.

In step 307, the transmitter encodes and modulates the TX data at the determined MCS level. In step 309, the transmitter maps the encoded/modulated data to a diversity zone according to the scheduling results. At this point, the encoded/modulated data are mapped to the remaining frequency band except the null subbands.

In step 311, the transmitter OFDM-modulates the mapped data, converts the OFDM-modulated data into an RF signal, and transmits the RF signal through an antenna.

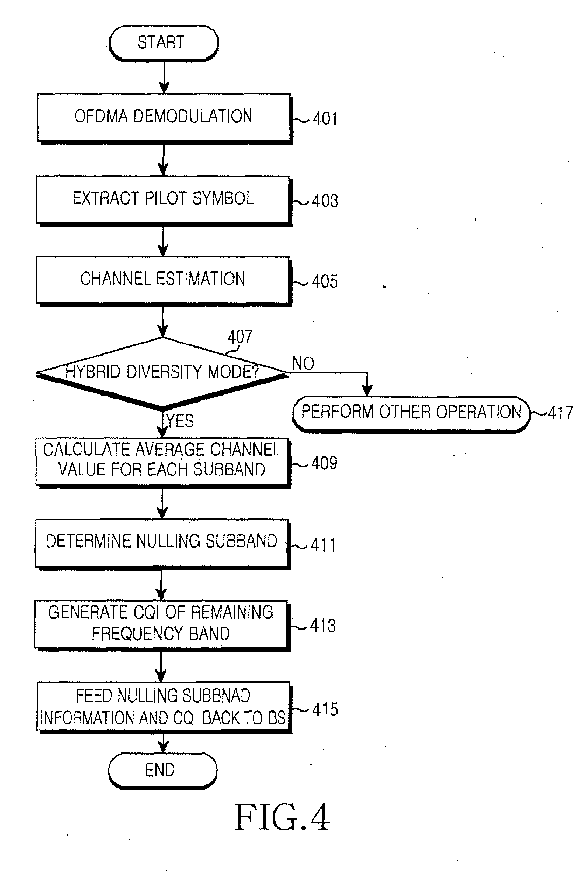

Referring to FIG 4, in step 401, the receiver converts an RF signal received through the antenna into a baseband signal, and OFDM-demodulates the baseband signal to acquire frequency-domain data.

In step 403, the receiver extracts symbols (e.g., pilot symbols) at a predetermined subcarrier location for channel estimation from the frequency-domain data. In step 405, the receiver performs channel estimation using the extracted symbols, thereby acquiring the channel estimation values for the entire frequency band.

In step 407, the receiver determines if a current mode is a hybrid diversity mode. If so, the receiver proceeds to step 409, and if not, the receiver proceeds to step 417. In step 417, the receiver performs other operation such as an operation corresponding to a diversity mode or a band AMC mode.

In step 409, the receiver calculates an average channel value (e.g., SINR) for each subband using the channel estimation values. In step 411, the receiver compares the calculated average channel value with a predetermined threshold to determine null subbands. At this point, the criteria for determining the null subbands and the number of the null subbands may be set by various methods.

In step 413, the receiver generates CQI of the remaining frequency band except the null subbands. The CQI may be an SINR of the remaining frequency band. In step 415, the receiver feeds information indicating the null subbands and the CQI back to a transmitter (such as a BS). The information indicating the null subbands and the CQI may be periodically fed back to the BS over a CQI channel.

Criteria for selecting one of a diversity mode, a band AMC mode, and a hybrid diversity mode can be set by various methods. For example, an optimal transmission mode may be selected according to the moving speed of the SS. The diversity mode is suitable when the moving speed is high (above 30 km/h). The band AMC mode is suitable when the moving speed is low (below 3 km/h). The hybrid diversity mode is suitable when the moving speed is medium (3-30 km/h). Alternatively, the transmission mode may be determined according to the channel condition of the SS (e.g., frequency-selective fading characteristics, average SINR).

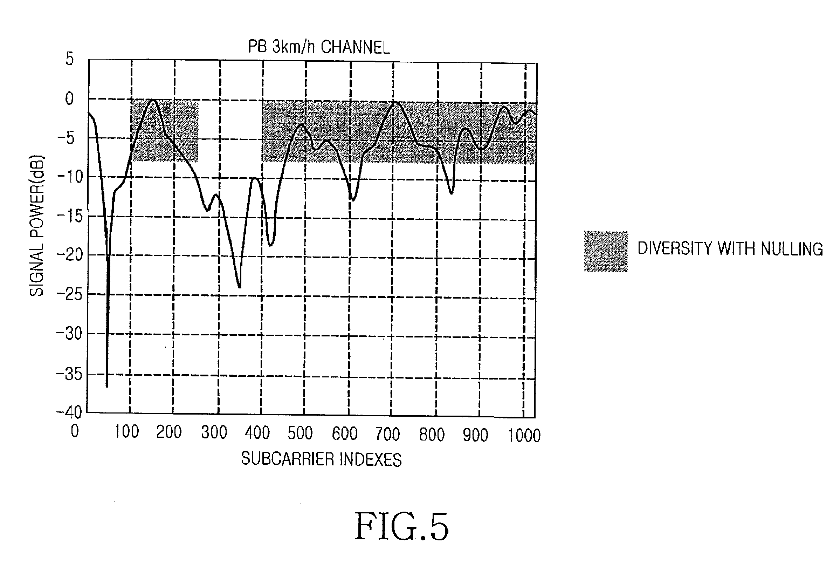

FIG. 5 is a graph illustrating an operational principle of the present invention. In the graph, the horizontal axis represents subcarrier indexes and the vertical axis represents signal power. If signal power changes as shown in the graph, the remaining frequency band except subbands corresponding to shaded regions is determined to be null subbands. Data are transmitted using the subbands corresponding to the shaded regions. As described above, the transmission mode in which a data symbol is not mapped to a subband with low RX power (e.g., SINR) is defined as "hybrid diversity mode".

The results of a simulation for verifying the performance of the present invention are as follows:

Simulation parameters are shown in Table 1 below.

**Table 1**

| Parameter | |
|---|---|
| TTI duration (msec) | 2 |
| FFT size (points) | 1024 |
| OFDM sampling rate (M samples/sec) | 6.258 |
| Ratio of OFDM sampling rate to UMTS chip rate | 17/10 |
| Guard time interval (samples/µsec) | 64/9.803 |
| Subcarrier separation (kHz) | 6.375 |
| # of OFDM symbols per TTI | 12 |
| OFDM symbol duration (µsec) | 166.67 |
| # of useful subcarrier per OFDM symbol | 705 |
| OFDM bandwidth (Mhz) | 4.495 |
| # of information symbols per TTI | 8460 |

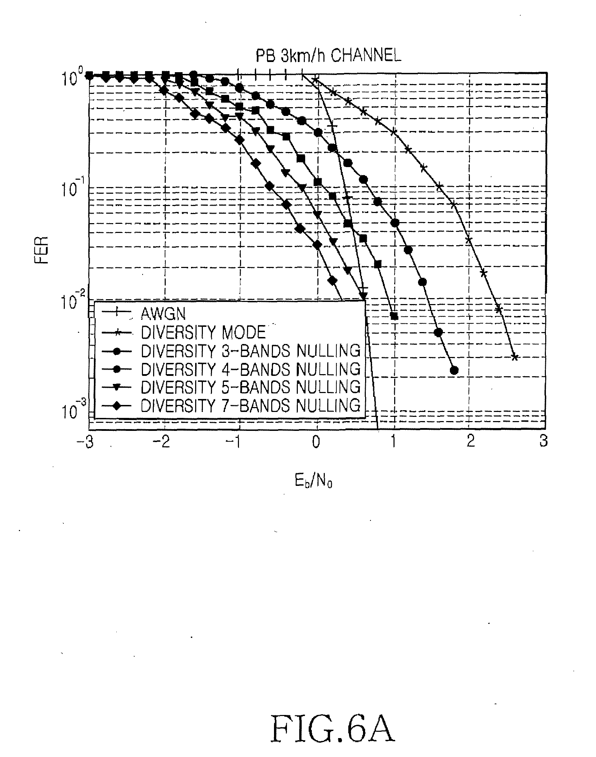

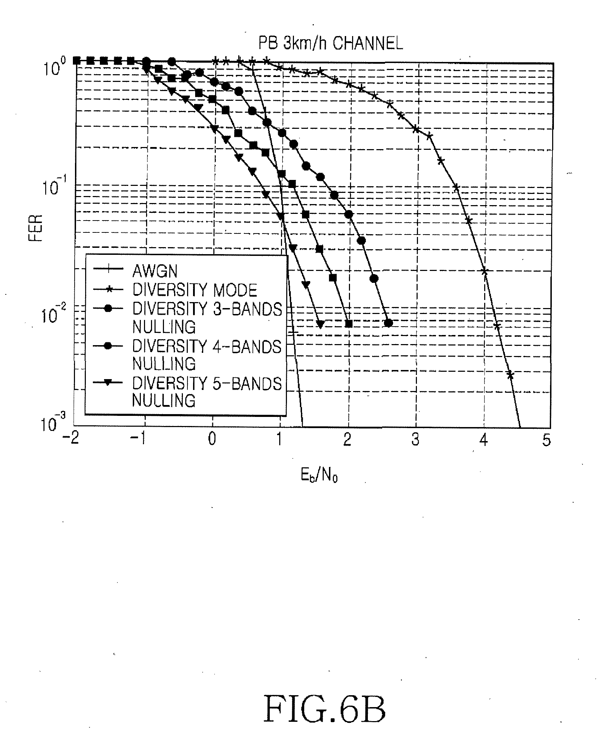

FIGs. 6A and 6B are graphs comparing the performance of a diversity mode with the performance of a hybrid diversity mode.

The graph of FIG. 6A corresponds to a case where a QPSK modulation scheme is used, a coding rate is 1/3, and a simulation channel environment includes a PB (Pedestrian B)=3 km/h channel. The graph of FIG. 6B corresponds to a case where a QPSK modulation scheme is used, a coding rate is 1/2, and a simulation channel environment includes a PB=3 km/h channel. In the graphs of FIGs. 6A and 6B, a horizontal axis and a vertical axis represent RX signal power (Eb/No) and a Frame Error Rate (FER), respectively.

As can be seen from FIGs. 6A and 6B, the hybrid diversity mode according to the present invention has a performance gain that is enhanced when the subbands with poor channel conditions are excluded from data transmission when compared to the conventional diversity mode.

As the simplest example, the transmission mode is switched according to the moving speed of an SS.

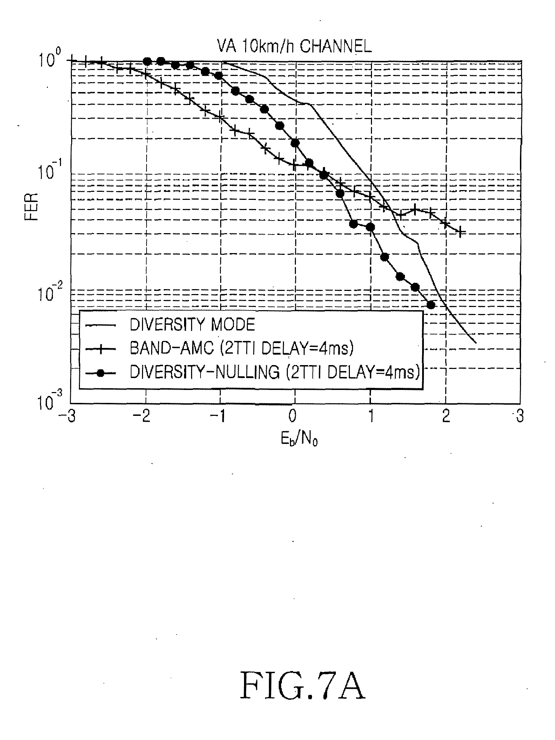

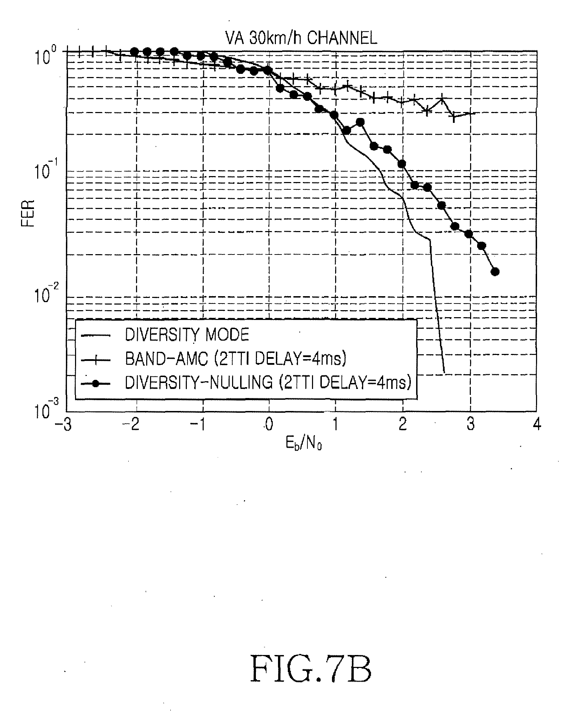

FIGs. 7A and 7B are graphs illustrating the performances of transmission modes depending on the moving speeds of an SS.

The graph of FIG. 7A corresponds to a case where a QPSK modulation scheme is used, the coding rate is 1/3, and the simulation channel environment includes a VA (Vehicular A)=10 km/h channel. The graph of FIG. 7B corresponds to the case where a QPSK modulation scheme is used, the coding rate is 1/3, and the simulation channel environment includes a VA=30 km/h channel. In the graphs of FIGs. 7A and 7B, the horizontal axis and the vertical axis represent RX signal power (Eb/No) and an FER, respectively.

As can be seen from FIGs. 7A and 7B, the optimal transmission mode depends on the delay and the moving speed of the SS. The performance of the band AMC mode is optimal when the moving speed is 3 km/h. The performance of the hybrid diversity mode is optimal when the moving speed is 10 km/h. The performance of the diversity mode is optimal when the moving speed is 30 km/h.

As described above, the present invention excludes the frequency subbands with poor channel conditions from data transmission, thereby making it possible to enhance the FER performance and transmit data at a high MCS level. Also, because the diversity mode is basically used in the SS, the present invention can be applied also to the SS moving at a high speed. Also, because diversity MAP allocation is possible, the hybrid diversity mode according to the present invention is simpler in operation and lower in signaling overhead than the conventional band AMC mode.

Although the downlink transmission has been taken as an example in the above embodiment, the hybrid diversity mode according to the present invention can be similarly applied to uplink transmission.

While the invention has been shown and described with reference to certain preferred embodiments thereof, it will be understood by those skilled in the art that various changes in form and details may be made therein without departing from the spirit and scope of the invention as further defined by the appended claims.

## Claims

1. An apparatus for transmitting data in a wireless communication system, comprising:
a controller for determining null subbands using feedback information received from a subscriber station (SS);
a subchannel mapper for mapping TX data to be transmitted to the SS to a diversity zone from which the null subbands has been excluded; and
an orthogonal frequency division multiplexing (OFDM) modulator for inverse fast Fourier transform processing the mapped data from the subchannel mapper.

2. The apparatus of claim 1, wherein the feedback information from the SS comprises information indicating null subbands and channel quality information (CQI) about the remaining subbands except the null subbands.

3. The apparatus of claim 1, further comprising:
an encoder for encoding the TX data; and
a modulator for modulating the encoded data from the encoder to output the modulated data to the subchannel mapper.

4. The apparatus of claim 3, wherein the coding rate and the modulation scheme are determined using the feedback information from the SS.

5. An apparatus for receiving data in a wireless communication system, comprising:
an orthogonal frequency division multiplexing (OFDM) demodulator for fast Fourier transform processing a received signal to generate frequency-domain data;
a channel estimator for estimating the channel using the frequency-domain data from the OFDM demodulator; and
a controller for determining, when the broadband wireless communication system operates in a hybrid diversity mode, null subbands with poor channel conditions using the channel estimation value from the channel estimator, and feeding information indicating the null subbands back to a transmitter.

6. The apparatus of claim 5, wherein the controller generates channel quality information (CQI) about the remaining subbands except the null subbands and feeds the generated CQI back to the transmitter.

7. The apparatus of claim 5, wherein the information indicating the null subbands is fed back to the transmitter over a CQI channel.

8. The apparatus of claim 5, wherein the controller calculates a signal-to-interference-plus-noise ratio (SINR) for each subband and compares the calculated SINR with a predetermined threshold to determine the null subbands.

9. A method for determining a transmission mode in a wireless communication system, comprising the steps of:
estimating a moving speed of a subscriber station (SS); and
determining the transmission mode to be a hybrid diversity mode in which transmission data are hopped over the remaining subbands except subbands with poor channel conditions if the estimated moving speed is medium.

10. A method for determining a transmission mode in a wireless communication system, comprising:
estimating a channel quality of a subscriber station (SS); and
, determining the transmission mode to be a hybrid diversity mode in which transmission data are hopped over the remaining subbands except subbands with poor channel conditions if the estimated channel quality satisfies a threshold.

11. The method of claim 10, wherein the channel quality is one of a frequency-selective fading characteristic and an average signal-to-interference-plus-noise ratio (SINR).

12. A method for transmitting data to a subscriber station (SS) in a wireless communication system, comprising:
determining null subbands using feedback information received from the SS;
mapping TX data to be transmitted to the SS to a diversity zone from which the null subbands has been excluded; and
modulating the mapped data and transmitting the OFDM-modulated data to the SS using orthogonal frequency division multiplexing (OFDM).

13. The method of claim 12, wherein the feedback information from the SS comprises information indicating null subbands and channel quality information (CQI) about the remaining subbands except the null subbands.

14. The method of claim 12, further comprising coding/modulating the data to be transmitted to the SS according to a modulation and coding scheme (MCS) level.

15. The method of claim 14, wherein the predetermined MCS level is determined using the feedback information received from the SS.

16. A method for receiving data in a wireless communication system, comprising the steps of:
demodulating a received signal to generate frequency-domain data using orthogonal frequency division multiplexing (OFDM);
estimating a channel using the frequency-domain data;
determining null subbands with poor channel conditions using the channel estimation value if the broadband wireless communication system operates in a hybrid diversity mode; and
feeding information indicating the null subbands back to a transmitter.

17. The method of claim 16, further comprising generating channel quality information (CQI) about the remaining subbands except the null subbands and feeding the generated CQI back to the transmitter.

18. The method of claim 16, wherein the information indicating the null subbands is fed back to the transmitter over a CQI channel.

19. The method of claim 16, further comprising:
calculating a signal-to-interference-plus-noise ratio (SINR) for each subband; and
comparing the calculated SINR with a predetermined threshold to determine the null subbands.

20. An apparatus for transmitting data in a wireless communication system, comprising:
a controller for determining null subbands using feedback information received from a subscriber station (SS);
a subchannel mapper for mapping TX data to be transmitted to the SS to a diversity zone from which the null subbands has been excluded; and
a multicarrier modulator for processing the mapped data from the subchannel mapper.
